# EUROPEAN PATENT APPLICATION

(11) **EP 0 521 837 A1**
(43) Date of publication of application: **07.01.1993**
(21) Application number: 92830355.1
(22) Date of filing: 03.07.1992
(51) Int. Cl.: F03B 3/08

(54) **Run-of-river turbine**

(30) Priority: 05.07.1991 IT MS910006
(71) Applicant: TONGIANI MACCHINE S.r.l., I-54100 Massa (IT)
(72) Inventor: Tongiani, Sauro, I-54100 Massa (IT)
(74) Representative: Bardini, Marco Luigi

(57) **Abstract**

A motor machine for the exploitation of water power such that available in watercourses wherein a substantially tubular rotor (3) is provided having an open end (2) and an end (4) closed by a bottom wall (5) integral to a driven shaft (6). The rotor (3) has side walls comprising a first and a second duct (11, 12) defined by semi-cylindrical shells (13, 14, 15, 16) and a longitudinal edge of the inner shell (14, 16) of a duct (11, 12) is rigidly fixed to a longitudinal edge of the inner shell (13, 15) of the other duct (12, 11). The water flowing through the rotor (3) from its upstream open end (2) runs through the ducts (11, 12) and leaves them through tangential mouths (11a, 12b) as jets imparting a rotary motion.

## Description

The present invention generally relates to the hydraulic machines field and more precisely it relates to a motor for the exploitation of water power, such that available in watercourses.

The water power of watercourses is exploited in many ways according to the flow rate and water drop available.

In the case of watercourses of insufficient capacity, to justify the building of dams, penstocks, hydroelectric power plants, etc., the exploitation of the energy available is often not carried out because it is not economically convenient.

In fact, river works capable of deviating the water and the installation of machines for the production of water power are very expensive operations which require considerable rusts for maintenance remarkably, this reducing the energy advantages which could be obtained.

At present, the sole systems for the exploitation of small watercourses' energy, besides the classical water mills which are more and more out of use, are little hydroeletric generating turbine stations of relatively easy installation. For these systems, in addition to the high costs of the machine, a waterhead of several dozens meters with flow rates of dozens liters/second of water is always needed in order to get an electric power able to justify the costs of the plant. Furthermore in most of country watercourses a water head higher than few meters, for which is possible to use said systems, is seldom available.

It is an object of the present invention to provide a motor machine for the exploitation of water power such that available in watercourses, which is economic to build and to set up and is suitable even in case of watercourses with low flow rate and low water head, like for example channels or brooks.

The above object is reached with the motor hydraulic machine according to the present invention which is characterized in that it comprises a substantially tubular rotor with an open end and the other end closed by a bottom wall integral to the shaft and has side walls formed by a first and a second duct which are defined by substantially semi-cylindrical shells. Each duct has an outer and an inner shell which are coaxial and parallel and one of the two longitudinal edges of the inner shell of one duct being integral to one of the two longitudinal edges of the outer shell of the other duct. The water flowing in the rotor from its open end, which is arranged upstream, runs through said ducts and leaves them as tangential jets which impart rotary motion to the rotor. An inlet opening having converging walls fixed to a frame integral to a bearing of said driving shaft is provided for near the open end of the rotor.

Further characteristics and advantages of the hydraulic motor machine according to the invention will be made clearer with the following description of a non limiting, exemplifying embodiment, with reference to the attached drawings wherein:
- Figure 1 shows a longitudinal sectional view of a hydraulic motor machine according to the invention;
- Figure 2 shows a perspective view of a rotor of the figure 1 of the machine;
- Figure 3 shows a partially sectional view of the machine seen in the direction of arrow III of figure 1;
- Figure 4 shows a view of the machine seen in the direction of arrow IV of figure 1.

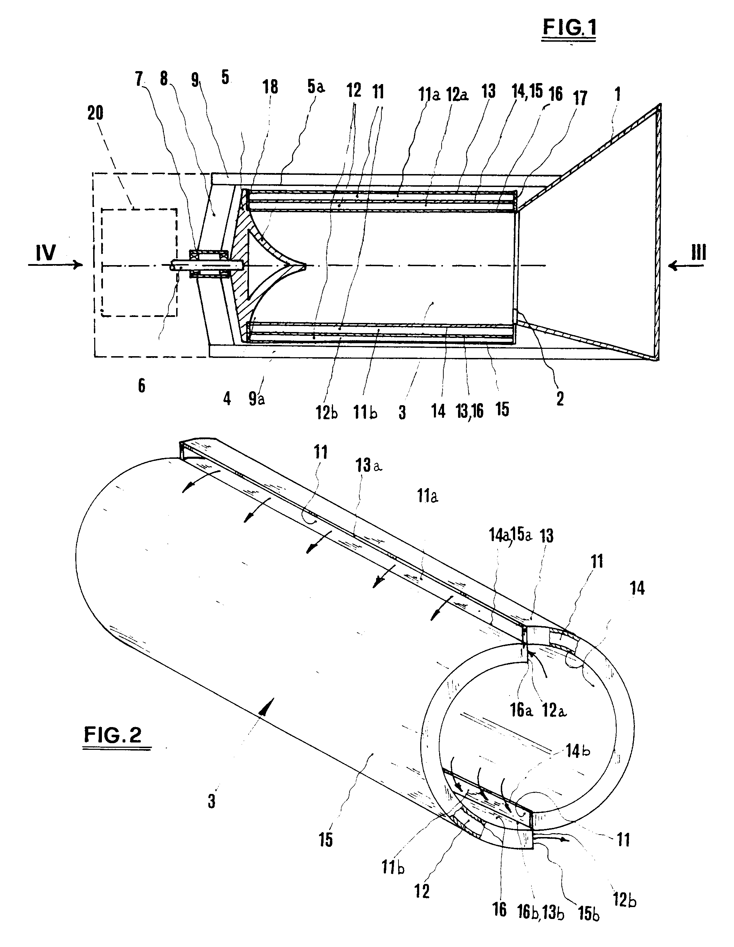

With reference to figure 1, the machine according to the present invention comprises an inlet opening 1 with walls converging towards an open end 2 of a rotor 3 having the other end 4 closed by a bottom wall 5 having a peak-shaped side 5a and integral to a driven shaft 6. The latter is supported by a bearing 7 integral, by means of spokes 8, with a frame 9 having a base 9a and joined with the inlet opening 1.

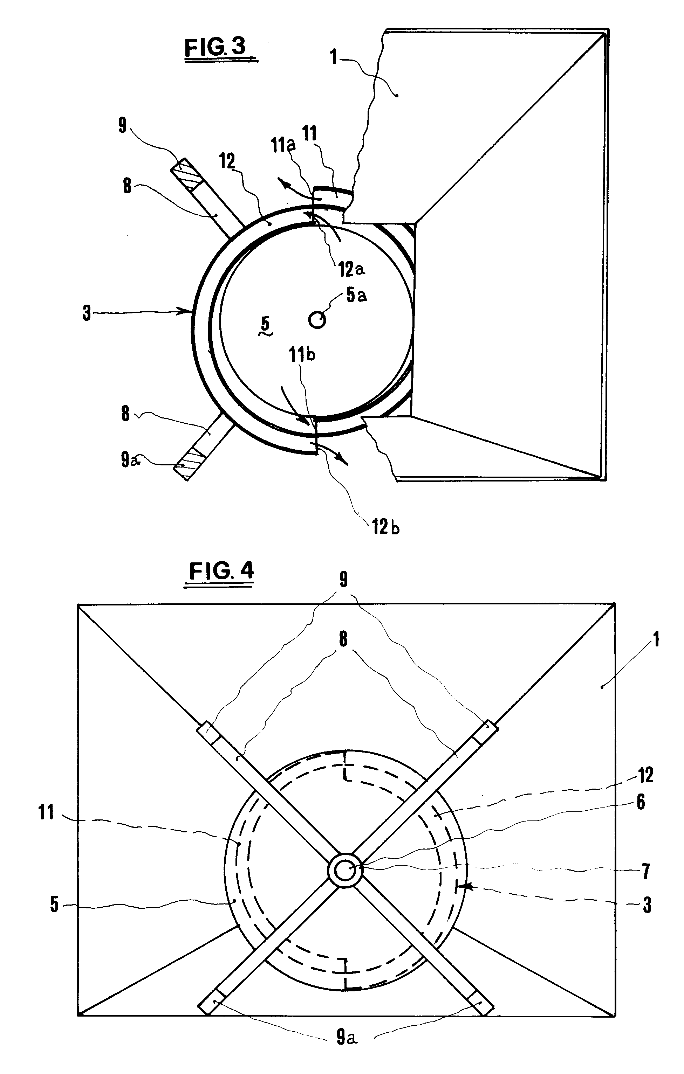

According to the invention, with reference also to figures 2, 3 and 4, the rotor 3 is substantially tubular and has side walls formed by a first and a second pair of semi-cylindrical ducts 11 and 12 respectively, each defined by two semi-cylindrical shells: an outer shell 13 and an inner 14 for the first duct 11 and an outer shell 15 and an inner 16 for the second duct 12. The two ducts 11 and 12 are rigidly joined in order that a longitudinal edge 16a of the inner shell 16 is fixed with a longitudinal edge 13b of the outer shell 13 and likewise a longitudinal edge 14a of the inner shell 14 is fixed with a longitudinal edge 15a of the outer shell 15.

The two ducts 11 and 12 are substantially circumferentially arranged with respect to the axis of the rotor 3 and are opened inside the rotor through inlet mouths 11b and 12a and communicate with the outside through outlet mouths 11a and 12b which are tangentially arranged . The former are defined by longitudinal edges 13b, 14b and 16a, 15a respectively, while the latter are defined by the longitudinal edges 13a, 14a and 16b, 15b respectively. The two ducts 11 and 12 have axial ends closed by ring plates 17 and 18, shown in figure 1.

With reference to the latter figure, after having placed or fixed the motor machine according to the invention to the bottom of a watercourse, with the inlet opening 1 arranged upstream, a raise of the water level caused by the converging walls of the inlet opening 1 takes place until a waterhead capable of imparting a rotary motion to the rotor 3 sets up. This motion is a consequence of the water jets which, after entering the ducts 11 and 12 through the mouths 11b and 12a, tangentially leave the rotor 3 through the outlet mouths 11a and 12b. The peak-shaped side 5a of the bottom wall 5 make the water flow towards the inlet mouths 11b and 12a easier.

The torque caused by the water jets thrust may be exploited to produce electric power by means of a known type generator 20, shown with a dotted line in figure 1, jointed to the driven shaft 6 and arranged downstream the rotor 3.

The construction of the hydraulic motor machine according to the invention, is therefore very economic, it being made of usual carpentry. In case of low speed flow of the water course the installation may not require masonry works, whereas a simple anchorage may be sufficient in case of faster flow so as to prevent the stream to drug the machine.

In case of flood of the watercourse the machine can be raised in order to avoid damages, for example by means of a fixed winch provided for on a side.

In order to prevent the rotor 3 from being blocked by leaves, seaweed, etcetera, which could be carried by the stream, in the opening inlet 1 a grate is advantageously provided for to retain said waste which must be removed periodically.

Machines according to the invention are suitable for being arranged in succession along a watercourse. In fact, two next machines can be arranged even at a distance of few meters one another without blocking the watercourse flow.

In particular, the machine according to the invention can be used as an electric power generator in the agricultural, forestal, etc., fields, in case a brook or a channel with sufficient stream is available.

## Claims

1. Motor machine for the exploitation of water power such that available in watercourses comprising a rotor (3) integral to a driving shaft (6) connected to means for energy conversion (20) characterized in that said rotor (3) is of substantially tubular shape, with an open end (2) and the other end (4) closed by a bottom wall (5) integral to said shaft (6) and comprises side walls formed by a first and a second duct (11,12) which are defined by substantially semi-cylidrical shells (13, 14, 15, 16) each duct having an outer (13, 15) and an inner (14, 16) shell which are coaxial and parallel, one of the two longitudinal edges (14a, 16b) of the inner shell (14, 16) of a duct (11, 12) being integral to one of the two longitudinal edges (15a, 13b) of the outer shell (15, 13) of the outer duct (12, 11) respectively, said longitudinal edges (13a, 14a - 13b, 14b - 15a, 16a - 15b, 16b) defining tangential outlets (11a, 11b, 12a, 12b) for the water coming from the inside of the rotor (3), whereby the water flowing in the rotor (3) from its open end, which is arranged upstream, runs through said ducts (11, 12) and leaves them as tangential jects which impart rotary motion to it (3), an inlet opening (1) having converging walls fixed to a frame (9) integral to a bearing (7) of said driving shaft (6) being provided for near the open end of the rotor.

2. Motor machine according to claim 1, wherein said frame (9) comprises a basis (9a) to be arranged on the bottom of a watercourse and is fixed to said bearing (7) by means of a multiplicity of spokes (8) aimed to make the water flow easier.

3. Motor machine according to claims 1 and 2, wherein said bottom wall (5), internally to said rotor (3), has a peak-shaped side (5a) able to radially deviate the water flow towards said ducts (11, 12).
